# EUROPEAN PATENT APPLICATION

(11) **EP 1 384 573 A1**
(43) Date of publication of application: **28.01.2004**
(21) Application number: 03380098.8
(22) Date of filing: 23.04.2003
(51) Int. Cl.: B32B 17/10, B32B 9/00, B44C 5/04

(54) **Multilayered glass plate with intermediate decorative sheet**

(30) Priority: 22.07.2002 ES 200201859
(71) Applicant: CRISTALES CURVADOS S.A., E-08400 Granollers, Barcelona (ES)
(72) Inventor: Figuerola Gili, Fernando, 08400 Granollers (ES)
(74) Representative: Esteban Perez-Serrano, Maria Isabel

(57) **Abstract**

The invention disclosed herein relates to a multilayer decorative plate with the appearance of shiny marble and with a small thickness. Said multilayer plate is comprised of at least two layers, the outer or exposed glass layer and the rear marble layer, joined to each other by a transparent adhesive that allows seeing the texture of the marble. In addition, a second glass layer can be disposed to protect both faces of the marble layer.

## Description

### OBJECT OF THE INVENTION

The present invention relates to a multilayer decorative plate with the appearance of shiny marble and a reduced thickness.

This multilayer plate has at least two layers, an external or exposed glass layer and the rear marble layer, joined to each other by a transparent adhesive that allows seeing the texture of the marble.

In addition, it can have a second glass layer protecting both sides of the marble layer.

### BACKGROUND OF THE INVENTION

Glass plates are known that incorporate on their inner face a layer acting as a solar filter.

In said glass plates this layer is protected from the external elements by being attached on the inner face; in addition, sunlight is allowed to pass, filtering the rays allowing to pass only light within the frequency range determined by the filter layer.

Among this type of glass plates, a special type incorporates mirrored layers that allow seeing through it in one direction while in the opposite direction they act as a mirror.

Also known are boards made of a certain noble and expensive material coated with a protective layer to prevent damaging the valuable material.

Improvements on this type of board allow reducing the thickness of the material, providing the overall appearance by structural reinforcements with other layers of lesser value that are mechanically strong.

From this structural point of view the increased strength can also be obtained by a suitable combination of materials, some with high tensile strength but being fragile and others with a higher tenacity yet not a great tensile strength. For example, this is the case with multilayer glass used in vehicles.

This type of layered glass incorporates an intermediate plastic layer that in the event of an impact prevents the glass from shattering and being expelled towards the driver.

In this type of glass it is important that the plastic layer be unnoticeable and allow light to pass, in order to obtain the greatest possible visibility.

In the present invention a special layered configuration is provided comprised of one or two glass layers and a marble layer to obtain a decorative plate that combines aesthetic appearance and mechanical strength.

### DESCRIPTION OF THE INVENTION

The invention object of the present memory relates to a decorative multilayer plate with the appearance of marble.

Marble layers are widely used to decorate refined environments, being used on walls, floors, counters or tables.

These plates must be strong enough to withstand the loads applied on them.

The strength requirements are only satisfied when the plate as a sufficiently large thickness, so that the cost of the material is high.

In addition, marble is a porous material with the disadvantage that when a substance falls on it and stains it, it will penetrate through the pores making it impossible to clean.

One should consider in this sense the use of marble plates in counters, where the probability of a liquid falling on it and staining it is high.

The present invention combines the use of glass and marble. A first glass layer is adhered to a second marble layer with a transparent adhesive, preferably a butyral, producing a plate combining the strength of glass and the appearance of marble.

The marble can be seen through the glass and the layer of transparent adhesive; in turn, the marble acquires a shiny appearance due to the glass layer, and cannot be stained by a substance that falls on the glass layer.

From a mechanical point of view, the combined use of the two plates produces a strong, tenacious plate with a thickness that is much lower than would be required of a marble layer to withstand similar loads.

As marble is a stone, it cannot be cut into excessively thin plates without it breaking when handled.

The thickness ensuring that it will not break during handling determines the limiting value for constructing a plate such as the one of the invention. Typically, this thickness is 2 mm.

In addition, when the marble layer is more than 1 cm thick it will not allow light to pass through, greatly reducing the translucid appearance in which diffusion of light is the main cause improving the aesthetics of this plate.

When this plate is used vertically to separate two spaces, such as for walls in room partitions, the two faces are exposed. In this case a second glass layer is placed over the other surface of the marble layer, providing the protection required to give the assembly an identical appearance and protection on either side.

The use of this invention is not limited to an individual component, among its applications being the union to another assembly of plates joined to each other of any nature, or on a support of lower quality to be used as a floor. In this case, the object of the invention is still the multilayer plate comprised at least of the glass layer and the marble layer joined to each other, which when placed on the top surface constitutes the exposed layer.

### DESCRIPTION OF THE DRAWINGS

The present descriptive memory is complemented by a set of drawings illustrating the preferred example and in no sense limiting the invention.

Figure 1 is a schematic sectional representation of the stratified structure of the multilayer plate comprising a glass layer and a marble layer.

Figure 2 is a schematic sectional representation of the stratified structure of the multilayer plate with two glass layers protecting both faces of the middle marble layer.

### PREFERRED EMBODIMENT OF THE INVENTION

In view of the above, the present invention relates to a multilayer decorative plate with the appearance of marble.

The multilayer plate comprises at least two layers, a glass layer (1) and a marble layer (3).

These two layers are joined by a transparent adhesive (2), preferably butyral, which adheres one layer to the other while allowing to see the texture of the marble (3) through the glass (1).

The thickness of the marble layer (3) approaches 2 mm when intending to maximise the amount of light passing through the plate without the marble layer breaking when handled.

In this case, the glass layer (1) and the butyral (2) provide the strength and tenacity.

A greater thickness of the marble layer (3) will provide a greater strength, although it will obstruct passage of light.

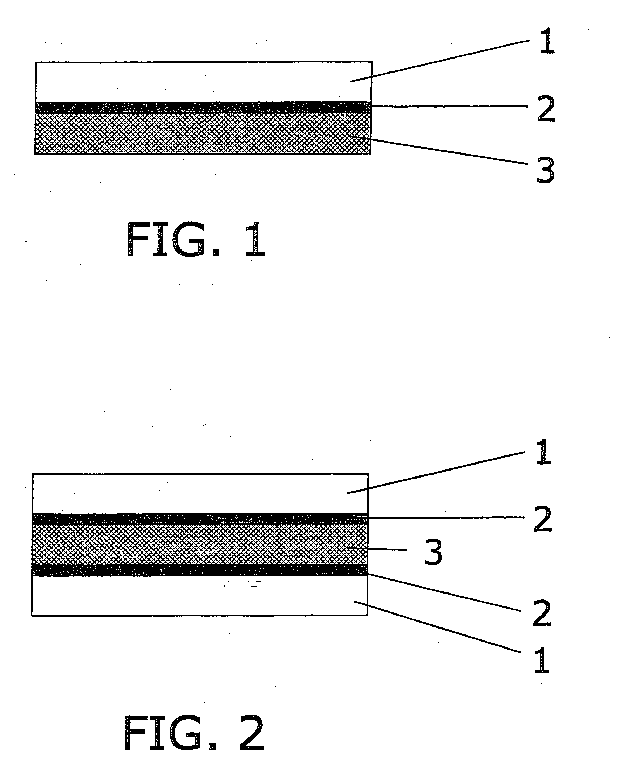

For applications such as its use in constructing walls with the appearance of marble, the marble layer (3) is protected on both sides by corresponding glass layers (1) joined by butyral (2), producing the structure shown in figure 2.

The essence of this invention is not affected by changes in the materials, shape, size and arrangement of the component elements, described in a non-limiting manner such that an expert in the filed would be able to reproduce it.

## Claims

1. Multilayer decorative plate, from among glasses obtained by superimposing several layers, **characterised in that** it comprises two layers, a glass layer (1) and a marble layer (3) joined by a transparent adhesive (2), preferably butyral.

2. Multilayer decorative plate according to claim 1, **characterised in that** the marble layer (3) has a thickness between 2 and 10 mm.

3. Multilayer decorative plate according to claim 1, **characterised in that** the free face of the marble layer (3) also incorporates a second glass layer (1) joined by a transparent adhesive (2), preferably butyral, so that both faces of the marble layer (3) are protected by glass layers (1).
